# EUROPÄISCHE PATENTSCHRIFT

(11) **EP 4 088 107 B1**
(45) Veröffentlichungstag und Bekanntmachung des Hinweises auf die Patenterteilung: **18.11.2026**
(21) Anmeldenummer: 21700114.8
(22) Anmeldetag: 06.01.2021
(51) Int. Cl.: G01N 29/04, G01N 29/07, G01N 29/11, G01N 29/12, G01N 29/46

(54) **AKUSTISCHE FEHLSTELLENERKENNUNG IN EINER ROHRLEITUNG**
ACOUSTIC DETECTION OF DEFECTS IN A PIPELINE
DÉTECTION ACOUSTIQUE DE DÉFAUTS DANS UNE CANALISATION

(30) Priorität: 06.01.2020 BE 202005003
(43) Veröffentlichungstag der Anmeldung: 16.11.2022
(73) Patentinhaber: Rosen IP AG, 6370 Stans (CH)
(72) Erfinder: BOUAOUA, Nourreddine, 76189 Karlsruhe (DE)
(74) Vertreter: AURODION PartmbB
(86) Internationale Anmeldenummer: PCT/EP2021/050124
(87) Internationale Veröffentlichungsnummer: WO 2021/140117

(56) Entgegenhaltungen:
- EP-A2- 1 333 277
- EP-A2- 2 857 834
- WO-A1-92/10746
- DE-C1- 4 141 123
- SONG SHOUPENG ET AL: "Quadrature demodulation based circuit implementation of pulse stream for ultrasonic signal FRI sparse sampling", MEASUREMENT SCIENCE AND TECHNOLOGY, IOP, BRISTOL, GB, vol. 28, no. 3, 17 January 2017 (2017-01-17), pages 35005, XP020313829, ISSN: 0957-0233, [retrieved on 20170117], DOI: 10.1088/1361-6501/28/3/035005

## Beschreibung

### Technisches Gebiet

Die vorliegende Erfindung betrifft die akustische Bestimmung einer Fehlstelle einer Rohrleitungswand.

### Hintergrund der Erfindung

Bekannte Sensoren zur Erkennung von Fehlstellen, wie zum Beispiel Rissen, in Rohrleitungswänden sind in ihren Detektionseigenschaften auf bestimmte Fehlstellengrößen festgelegt. Bei der Erhöhung der Sensitivität sind aufwendige Konfigurationen und Korrekturverfahren notwendig, um eine hinreichende Genauigkeit bei der Erkennung der Fehlstellen zu erreichen.

EP 2 857 834 A2 betrifft Wandler, welche eine Pipeline kontaktierend Fehlstellen bestimmen. Die Wandler können auf einem Haltering auf der Oberfläche der Pipeline angeordnet sein. Es ist demnach nicht offenbart oder vorgesehen, dass detektierende Transmittereinheiten in Kreisen um eine oder mehrere Ultraschall emittierende Transmittereinheit(en) angeordnet sind.

Bei den Fehlstellen handelt es sich um korrodierte Fehlstellen. Gemäß einem vorgeschlagenen Messverfahren sendet ein Wandler ein Ultraschallsignal. Ein Teil des Ultraschallsignals wird von der Fehlstelle zum Wandler reflektiert. Teile des reflektierten Ultraschallsignals werden von anderen Wandlern und empfangen. Der Ort der Fehlstelle wird mittels Triangulation aus den Ausbreitungszeiten der reflektierten Teile des Ultraschallsignals ab seinem Emittierungszeitpunkt von dem Wandler bestimmt. Weiterhin ist vorgesehen, dass zum Bestimmen eines Außendurchmessers der Fehlstelle die an den anderen Wandlern empfangenen Signale verwendet werden.

EP 1 333 277 A2 betrifft einen in Umfangsrichtung einer zu prüfenden Rohrleitung angeordnete Wandlerelemente eines Gruppenstrahlers zum Detektieren von Fehlstellen in der Rohrleitung. Hierbei sendet ,,[j]eder der Gruppenstrahler 16, 16' (...) mittels eines Teilbereiches, d.h. eines virtuellen Sensors, zeitlich eng aufeinander folgend drei Ultraschallsignale unter den bereits mehrfach angesprochenen drei Einstrahlwinkeln 0°, alpha, alpha' aus, in der Regel derart, dass das Fortschreiten der Wellenfront in der Rohrleitung unter einem Winkel von 45° erfolgt, wobei also alpha' = -alpha ist."

Die einzelnen Wandlerelemente eines Gruppenstrahlers sind aneinandergereiht. Dabei heißt "Reihung der Wandlerelemente (...) nicht, dass die Gruppenstrahler gebogen sein müssen oder zur Abdeckung über den Umfang zusammen angeordnet sind- sie können auch eben ausgebildet sein und zur Abdeckung über den Umfang hin zueinander geneigt angeordnet sein."

Das Dokument offenbart keine Verwendung von Pitch-Catch Modus und Pulse-Echo-Modus, um Fehlstellen zu erkennen. Auch offenbart das Dokument nicht, dass die Transmittereinheiten je nach Betriebsmodus im PE-Modus oder im PC-Modus als eine erste oder als eine zweite Transmittereinheit operieren, wobei detektierende Transmittereinheiten in Kreisen um eine oder mehrere Ultraschall emittierende Transmittereinheit(en) angeordnet sind.

WO 92/107 46 A1 betrifft ein Verfahren zur Laufzeitmessung von Ultraschall bei der Impuls-Reflexionsmethode. Jedenfalls offenbart das Dokument nicht, dass die Transmittereinheiten je nach Betriebsmodus im Pulse-Echo-Modus oder im Pitch-Catch-Modus als eine erste oder als eine zweite Transmittereinheit operieren, wobei detektierende Transmittereinheiten in Kreisen um eine oder mehrere Ultraschall emittierende Transmittereinheit(en) angeordnet sind. Auch offenbart das Dokument keine Verwendung von Pitch-Catch und Pulse-Echo-Modus, um Fehlstellen zu erkennen.

DE 41 41 123 C1 betrifft ein Verfahren mit der Zielsetzung "die Kompression von Daten im Speicher eines Ultraschallmolchs zu erhöhen, damit eine große Pipelinelänge uneingeschränkt und wirtschaftlich durchfahren werden kann, wobei die rauhen Umweltbedingungen bei der Speicherung der Daten besonders berücksichtigt werden müssen". Dementsprechend ist die Offenbarung vor allem auf Verfahren von Datenkompression gerichtet. Bezüglich einer räumlichen Anordnung der Wandler ist auf beschrieben: "Um die Rohrwand flächendeckend auszuleuchten, muß man eine der Sensorausleuchtungsfläche entsprechende Anzahl von Sensoren in azimutaler Richtung nebeneinander anbringen, die alle nacheinander gefeuert werden und ihre Information liefern." Das Dokument offenbart keine Verwendung von Pitch-Catch Modus und Pulse-Echo-Modus, um Fehlstellen zu erkennen. Auch offenbart das Dokument nicht, dass die Transmittereinheiten je nach Betriebsmodus im PE-Modus oder im PC-Modus als eine erste oder als eine zweite Transmittereinheit operieren, wobei detektierende Transmittereinheiten in Kreisen um eine oder mehrere Ultraschall emittierende Transmittereinheit(en) angeordnet sind.

SONG SHOUPENG ET AL: "Quadrature demodulation based circuit implementation of pulse stream for ultrasonic signal FRI sparse sampling", MEASUREMENT SCIENCE AND TECHNOLOGY, IOP, BRISTOL, GB, Bd. 28, Nr. 3, 17. Januar 2017, Seite 35005, XP020313829, ISSN: 0957-0233, DOI: 10.1088/1361-6501/28/3/035005c offenbart keine Verwendung von Pitch-Catch Modus und Pulse-Echo-Modus, um Fehlstellen zu erkennen. Auch offenbart das Dokument nicht, dass die Transmittereinheiten je nach Betriebsmodus im PE-Modus oder im PC-Modus als eine erste oder als eine zweite Transmittereinheit operieren, wobei detektierende Transmittereinheiten in Kreisen um eine oder mehrere Ultraschall emittierende Transmittereinheit(en) angeordnet sind.

### Beschreibung der Erfindung

Ausgehend von dieser Situation ist es eine Aufgabe der vorliegenden Erfindung, ein verbessertes Sensorsystem zur Fehlstellenbestimmung einer Rohleitungswand, ein verbessertes Inline-Inspektionsgerät, ein verbessertes Verfahren zur Fehlstellenbestimmung einer Rohrleitungswand, ein verbessertes Computerprogramm, ein verbessertes Datenträgersignal und ein verbessertes computerlesbares Medium anzugeben.

Insbesondere soll eine Konfiguration vereinfacht werden, wobei gleichzeitig die Sensitivität erhöht werden soll, so dass zum Beispiel Fehlstellen mit kleineren Dimensionen bestimmt werden können.

Die Aufgabe der Erfindung wird durch die Merkmale der unabhängigen Hauptansprüche gelöst. Vorteilhafte Ausgestaltungen sind in den Unteransprüchen angegeben. Sofern technisch möglich, können die Lehren der Unteransprüche beliebig mit den Lehren der Haupt- und Unteransprüche kombiniert werden.

Erfindungsgemäß ist somit ein akustisches Sensorsystem zum Bestimmen von einer Fehlstelle einer Rohrleitungswand gemäß Anspruch 1 angegeben.

Erfindungsgemäß ist weiter ein Inline-Inspektionsgerät (ILI) zur Untersuchung einer Rohrleitungswand angegeben, welches zumindest ein akustisches Sensorsystem gemäß der Erfindung oder gemäß einer der nachfolgend beschriebenen vorteilhaften Ausführungsformen aufweist.

Erfindungsgemäß ist weiter ein Verfahren zum Bestimmen von einer Fehlstelle einer Rohrleitungswand gemäß Anspruch 11 angegeben.

Es ist bevorzugt, dass die Reihenfolge der vorgenannten Verfahrensschritte, soweit nicht technisch in der vorgenannten Reihenfolge erforderlich, variiert werden kann.

Erfindungsgemäß ist weiter ein Computerprogramm angegeben.

Erfindungsgemäß ist weiter ein computerlesbares Medium angegeben.

Nachfolgend werden die Grundidee der Erfindung und einzelne Aspekte des beanspruchten Erfindungsgegenstandes erläutert und weiter nachfolgend bevorzugte modifizierte Ausführungsformen der Erfindung beschrieben. Erläuterungen, insbesondere zu Vorteilen und Definitionen von Merkmalen, sind dem Grunde nach beschreibende und bevorzugte, jedoch nicht limitierende Beispiele. Sofern eine Erläuterung limitierend ist, wird dies ausdrücklich erwähnt.

Grundidee der vorliegenden Erfindung ist es also, Ultraschallsensoren zur Detektion von Fehlstellen zu nutzen. Insbesondere können Fehlstellen in Form von Korrosion, Beulen und Rissen erkannt werden. Die Risse können beliebig ausgebildet sein. Beispielsweise können zu den Ultraschallsensoren schräg verlaufende Risse detektiert werden. Zudem können Größe und Form von Rissen verschiedener Formen, wie z. B: kreisförmiger Risse, abgewinkelter Risse oder Schrägrisse erkannt werden. Hierbei ist es nicht erforderlich, in Bezug auf die verschiedenen Rissformen das System speziell zu konfigurieren. Weiterhin kann die Geometrie der Rohrleitung bestimmt werden. Winkelstrahlsonden sind nicht erforderlich.

Bei der Detektion von Fehlstellen wird berücksichtigt, dass ein Großteil des Ultraschallecho-Signals durch eine Reflektion an einer intakten Innenwand der Rohrleitung von der Transmittereinheit detektierbar ist. Im Falle einer Korrosion der Innenwand ist an der Transmittereinheit eine Änderung des Signals entsprechend einer Änderung des Ultraschallechos feststellbar. Es hat sich hierbei überraschenderweise herausgestellt, dass eine einzige Transmittereinheit für das Sensorsystem ausreicht, um Korrosion zuverlässig detektieren zu können. Es ist kein komplexer Aufbau notwendig. In anderen Worten kann eine einzige Transmittereinheit zunächst über eine Strahlenaustrittsfläche Ultraschall emittieren. Über ihre Strahlenaustrittsfläche, welche dann ihrer Strahleneintrittsfläche entspricht, kann die Transmittereinheit das Ultraschallecho detektieren. Im Falle eines Einbaus des Sensorsystems in einem Inline-Inspektionsgerät (ILI) reicht demnach die einzige Transmittereinheit je Kreissektor einer Querschnittsfläche der Rohrleitung aus, um Korrosion zu erkennen. Je nach Anzahl der Kreissektoren, in welche die Querschnittsfläche geteilt ist, wird eine entsprechende Anzahl von Sensorsystemen gewählt. Je Kreissektor ist aber nur eine einzige Transmittereinheit erforderlich, von der separat zu anderen Sensoreinheiten Fehlstellen erkannt werden.

Zur Detektion von Korrosion ist mit Vorteil daher sehr wenig Konfigurationsaufwand aufzubringen, da es nicht notwendig ist, mehrere Transmittereinheiten anzusteuern oder Signale von diesen abzuhören und auszuwerten. Auch fällt wenig Ansteuerungselektronik an, welche in einem Sensorsystem oder in einem ILI eingesetzt werden müsste. Dies ermöglicht besonders kompakte Aufbauten von Sensorsystemen und auch ILIs, insbesondere, wenn diese zur Inspektion von korrosionsbefallen Rohrleitungen eingesetzt werden sollen. Mehrere Transmittereinheiten können beispielsweise eingesetzt werden, um eine Redundanz und damit eine Zuverlässigkeit von Messergebnissen zu erhöhen.

Gemäß einer modifizierten Ausführungsform der Erfindung ist vorgesehen, dass die Steuereinheit konfiguriert ist, zumindest eine erste Transmittereinheit des Sensorsystems anzusteuern, zum Emittieren von Ultraschall in Richtung der Rohrleitungswand und zum Detektieren eines von der Rohrleitungswand reflektierten Ultraschallechos; temporär zumindest eine zweite Transmittereinheit des Sensorsystems anzusteuern, zum Detektieren des von der Rohrleitungswand reflektierten Ultraschallechos; und die Fehlstelle der Rohrleitungswand anhand einer auftretenden Änderung des Ultraschallechos zu bestimmen.

In diesem Zusammenhang ist die Bezeichnung "erste Transmittereinheit" bzw. "zweite Transmittereinheit" auf die Art der Ansteuerung bezogen. Die zweite Transmittereinheit wird dabei lediglich zeitweise angesteuert.

In anderen Worten reichen zur zuverlässigen Detektion von Rissen mit Vorteil zwei Transmittereinheiten bereits aus. Das Verwenden von der zweiten Transmittereinheit nur temporär zum Detektieren von Ultraschallechos und eben nicht zum Emittieren von Ultraschall hat den Vorteil, dass die zweite Transmittereinheit nicht mit einer Spannung beaufschlagt wird, um ein Ultraschallsignal zu emittieren. Hierdurch kann mit Vorteil das Signal-Rausch-Verhältnis erheblich verbessert werden, was eine verbesserte Sensitivität der Fehlstellen-Erkennung ermöglicht, wobei gleichzeitig ein Konfigurationsaufwand aufgrund der Filterung von detektierten Signalen erheblich verringert wird. Mehr als zwei Transmittereinheiten könnten verwendet werden, um eine Zuverlässigkeit der Detektion zu verbessern.

Vorteilhafterweise werden Ultraschallecho-Signale ausgewertet, welche durch ein ledigliches Ansteuern der ersten Transmittereinheit, oder durch ein Ansteuern von der ersten Transmittereinheit und der zweiten Transmittereinheit erzeugt bzw. detektiert werden. Dabei wird berücksichtigt, dass ein Großteil des Ultraschallecho-Signals durch eine Reflektion an einer intakten Innenwand der Rohrleitung von der ersten Transmittereinheit detektierbar ist. Im Falle einer Korrosion der Innenwand ist an der ersten Transmittereinheit eine Änderung des Signals entsprechend einer Änderung des Ultraschallechos feststellbar. Hierbei muss die zweite Transmittereinheit nicht angesteuert werden, um Ultraschallechos zu detektieren. Auch wenn die erste und die zweite Transmittereinheit jeweils von der Steuereinheit angesteuert werden, ist eine Signaländerung an der ersten Transmittereinheit und an der zweiten Transmittereinheit feststellbar. Ein Riss kann in diesem Fall erkannt werden. Im Fall, dass ein Riss in der Rohrleitung ist, wird eine Signaländerung erkannt. Bei besonders kleinen Rissen ist dies mit Vorteil bereits durch die zweite Transmittereinheit detektierbar. Bei Auftreten eines Risses wird ein Teil des Ultraschalls durch den Riss blockiert. Ein Teil des Ultraschalls wird durch den Riss reflektiert. Im Fall einer Lokalisierung des Risses zwischen Ultraschallaustritts- bzw. -Eintrittsflächen der emittierenden Transmittereinheit und der detektierenden Transmittereinheit verringert sich eine Stärke des detektierten Signals des Ultraschallechos. Im Falle einer Annäherung von emittierender und reflektierender Transmittereinheit zu dem Riss steigt eine Stärke des Signals an im Vergleich zu einem Signal, welches durch eine intakte Rohrinnenwand emittiert wird und welches dann detektiert wird. Transmittereinheiten, welche in dem vorgenannten Ultraschall-Frequenzbereich operieren, sind besonders geeignet für Korrosions- und Risserkennung in einer Rohrleitung. Hierbei besteht keine Grenze bei der Erkennung der Tiefe der Risse und auch der Vermessung von tiefen Rissen. Weiterhin können an den Rohrleitungen Ablösungen von Beschichtungen der Rohrwände erkannt werden. Bevorzugt werden die Transmittereinheiten derart bezüglich der Rohrinnenwand ausgerichtet, dass der Ultraschall näherungsweise entsprechend einem Normalstrahl auf die Oberfläche der Rohrinnenwand auftrifft.

Gemäß einer modifizierten Ausführungsform der Erfindung ist bevorzugt vorgesehen, dass, insbesondere im Falle eines temporären Ansteuerns der zweiten Transmittereinheit, die Steuereinheit konfiguriert ist, eine Rissdetektion und eine Riss-Größenbestimmung anhand von zumindest einer Amplitude von zumindest einer Resonanzfrequenz und/oder zumindest einer Amplitude eines Außenwandechos durchzuführen. Gemäß einer modifizierten Ausführungsform der Erfindung ist bevorzugt vorgesehen, dass, insbesondere im Falle eines temporären Ansteuerns der zweiten Transmittereinheit, die Steuereinheit konfiguriert ist, eine Rissdetektion und eine Riss-Größenbestimmung anhand von Amplituden von Resonanzfrequenzen und/oder einer Amplitude eines Außenwandechos durchzuführen. Gemäß einer besonders vorteilhaften Ausführungsform der Erfindung ist vorgesehen, dass, insbesondere im Falle eines temporären Ansteuerns der zweiten Transmittereinheit, die Steuereinheit konfiguriert ist, eine Rissdetektion und eine Riss-Größenbestimmung anhand von Amplituden von Resonanzfrequenzen und/oder Amplituden eines Außenwandechos durchzuführen. Gemäß einer ganz besonders vorteilhaften Ausführungsform der Erfindung ist vorgesehen, dass die Steuereinheit konfiguriert ist, eine Rissdetektion und eine Riss-Größenbestimmung anhand von Amplituden von Resonanzfrequenzen in einer Frequenzebene und/oder (einer) Amplitude(n) eines Außenwandechos eines mittels FFT zweiten Grades transformierten Ultraschallsignals durchzuführen. Mit Vorteil wird ein solches Bestimmungsverfahren bei der Verwendung einer/mehrerer niederfrequent oder einer/mehrerer hochfrequent operierenden Transmittereinheit(en) verwendet.

Gemäß einer modifizierten Ausführungsform der Erfindung ist vorgesehen, dass eine Abschwächung des Ultraschallechos proportional zu einer Tiefe der Fehlstelle ist. Aufgrund des linearen Zusammenhangs lässt sich besonders einfach eine Risstiefe anhand der Amplitude bestimmen.

### Kurze Beschreibung der Zeichnungen

Nachfolgend wird die Erfindung unter Bezugnahme auf die anliegenden Zeichnungen anhand bevorzugter Ausführungsbeispiele näher erläutert. Die Formulierung Figur ist in den Zeichnungen mit Fig. abgekürzt.

In den Zeichnungen zeigen
- Figur 1a: eine schematische Ansicht eines Sensorsystems gemäß einer ersten Ausführungsform;
- Figur 1b: eine schematische Ansicht eines Sensorsystems gemäß einer zweiten Ausführungsform;
- Figur 2a: eine schematische Draufsicht auf eine Ultraschalleintritts-/Austrittsfläche einer Baueinheit eines Sensorsystems gemäß einer dritten Ausführungsform;
- Figur 2b: eine schematische Draufsicht auf eine Ultraschalleintritts-/Austrittsfläche einer Baueinheit eines Sensorsystems gemäß einer vierten Ausführungsform;
- Figur 2c: eine schematische Draufsicht auf eine Ultraschalleintritts-/Austrittsfläche einer Baueinheit eines Sensorsystems gemäß einer fünften Ausführungsform; und
- Figur 3: ein Flussdiagramm eines Verfahrens nach einem Ausführungsbeispiel.

### Detaillierte Beschreibung der Ausführungsbespiele

Die beschriebenen Ausführungsbeispiele sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wird, kann eigenständig oder in Kombination mit anderen Merkmalen in einem beliebigen anderen Ausführungsbeispiel genutzt werden. Jedes Merkmal, das für ein Ausführungsbeispiel einer bestimmten Anspruchskategorie beschrieben wird, kann auch in entsprechender Weise in einem Ausführungsbeispiel einer anderen Anspruchskategorie eingesetzt werden.

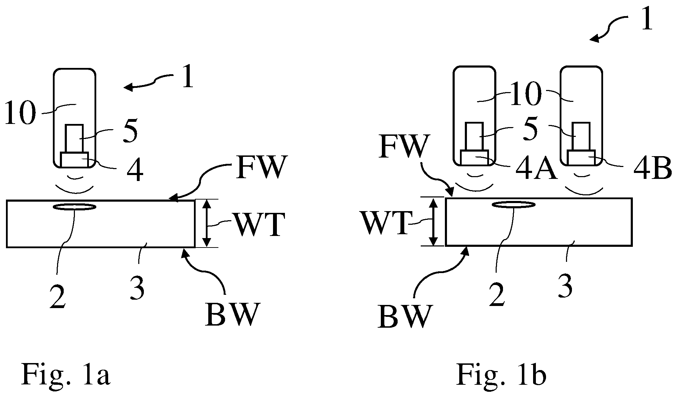

Die Figur 1a zeigt eine schematische Ansicht eines Sensorsystems 1 gemäß einer ersten Ausführungsform. Das Sensorsystem 1 eignet sich zum Erkennen von Fehlstellen 2 einer Rohrleitungswand 3. Die Rohrleitungswand 3 ist aus Metall, z. B. aus Stahl. Das Sensorsystem 1 weist eine Transmittereinheit 4 und eine Steuereinheit 5 auf. Die Transmittereinheit 4 und die Steuereinheit 5 sind in einer gemeinsamen Baueinheit 10 integriert. Die Transmittereinheit 4 ist konfiguriert, Ultraschall zu emittieren und Ultraschall zu empfangen, welcher in Form von Ultraschallechos von einer Rohrleitungswand 3 reflektiert wird.

Die Transmittereinheit 4 ist zum Aussenden und Detektieren von hochfrequentem Ultraschall ausgebildet. Hierbei emittiert die Transmittereinheit 4 hochfrequenten Ultraschall mit einer Frequenz in einem Bereich von 3 bis 5 MHz. Hierdurch bestimmt das Sensorsystem 1 beispielsweise Korrosion oder Ablösungen von Beschichtungen in flüssigkeitsführenden Rohrleitungen, welche beispielsweise öl- oder wasserführend sind.

Alternativ ist die Transmittereinheit 4 zum Aussenden und Detektieren von niederfrequentem Ultraschall ausgebildet. Hierbei emittiert die Transmittereinheit 4 niederfrequenten Ultraschall mit einer Frequenz in einem Bereich von 500 bis 600 KHz. Hierdurch bestimmt das Sensorsystem 1 beispielsweise Korrosion oder Ablösungen von Beschichtungen in gas- oder flüssigkeitsführenden Rohrleitungen. Beispielsweise kann Gas mit einem Druck von 10^7 Pa in der Rohrleitung vorliegen.

Nachfolgend wird für die Transmittereinheit 4 auch die Bezugszeichen 4A, 4B, 4a, 4b vergeben. Letztere Bezugszeichen beziehen sich auf eine bauliche Form der Transmittereinheiten 4, 4A, 4B, 4a, 4b, wobei alle Transmittereinheiten 4, 4A, 4B, 4a, 4b als erste oder als zweite Transmittereinheit angesteuert werden können.

Die Figur 1b zeigt eine schematische Ansicht eines Sensorsystems 1 gemäß einer zweiten Ausführungsform. Das Sensorsystem 1 des Ausführungsbeispiels der Fig. 1b ist geeignet, um Korrosion, Risse und Ablösungen von Beschichtungen an bzw. in einer Rohrleitungswand 3 zu erkennen, welche flüssigkeitsführend ist.

Das Sensorsystem 1 umfasst zwei Baueinheiten 10, welche räumlich voneinander getrennt sind. Die Baueinheiten 10 können zueinander in einem Abstand, beispielsweise von 5 cm, fixiert sein, oder relativ zueinander beweglich ausgestaltet sein. Die Baueinheiten 10 des Sensorsystems 1 umfassen jeweils eine Steuereinheit 5 und eine Transmittereinheit 4A, 4B. Alternativ kann gemäß einer nicht dargestellten Ausführungsform eine gemeinsame Steuereinheit 5 für beide Transmittereinheiten 4A, 4B vorgesehen sein. Die Steuereinheit 5 muss nicht innerhalb einer der Baueinheiten 10 des Sensorsystems 1 integriert sein. In der Ausführungsform sind zwei Baueinheiten 10 mit jeweils einer Transmittereinheit 4A, 4B dargestellt. Es können auch mehr als diese zwei Baueinheiten 10 mit jeweiliger Transmittereinheit 4A, 4B vorgesehen sein.

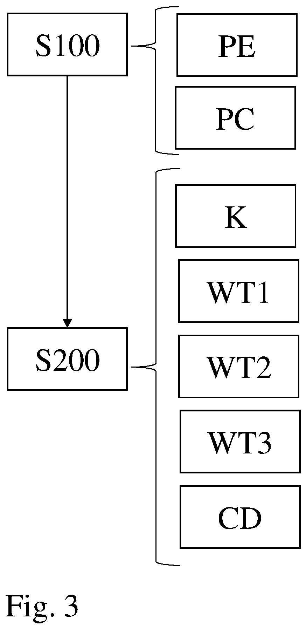

Die Transmittereinheiten 4A, 4B werden unterschiedlich von der Steuereinheit 5 angesteuert: Die erste Transmittereinheit 4A wird zum Betreiben eines Pulsecho-Modus angesteuert (engl. "pulse echo mode" oder PE-Modus), sowie zum Betreiben eines Neigungsfang-Modus (engl. "pitch catch mode" oder PC-Modus). Zusätzlich kann die erste Transmittereinheit gleichzeitig in dem Neigungsfang-Modus und in dem PE-Modus angesteuert werden (siehe hierzu auch Ausführungen zu dem Flussdiagramm in Fig. 3). Der PC-Modus wird nachfolgend auch mit "PC" abgekürzt und der PE-Modus wird nachfolgend auch mit "PE" abgekürzt. In beiden zuvor beschriebenen Modi PE, PC emittiert die erste Transmittereinheit 4A Ultraschall in Richtung der Rohrleitungswand 3 und detektiert von der Rohrleitungswand 3 reflektierte Ultraschallechos. Die zweite Transmittereinheit 4B wird im PC-Modus (siehe hierzu ebenfalls Ausführungen zu Fig. 3) angesteuert, um das von der Rohrleitungswand 3 reflektierte Ultraschallecho zu detektieren.

Die Steuereinheit 5 wird in beiden Modi PE und PC operiert. Die Steuereinheit 5 wertet Signale entsprechend den Ultraschallechos aus, um eine Fehlstelle 2 der Rohrleitungswand 3 anhand einer in dem Modus PE, PC auftretenden Änderung des Ultraschallechos zu bestimmen.

Bei einer intakten Rohrleitungswand 3 detektiert die erste Transmittereinheit 4A im PE-Modus einen Großteil des normal auf die Rohrleitungswand-Oberfläche emittierten Ultraschalls, welcher als Echo reflektiert wird. Ein geringfügiger Teil des Ultraschallechos wird durch die zweite Transmittereinheit 4B im PC-Modus detektiert. Im Falle von Korrosion detektiert die erste Transmittereinheit 4A im PE-Modus eine signifikante Änderung des Ultraschallechos. Auch die zweite Transmittereinheit 4B detektiert im PC-Modus eine Änderung des Ultraschallechos. Die detektierten Signaländerungen im PE- und im PC-Modus reichen jeweils aus, um zu bestimmen, dass Korrosion vorliegt. Im Falle eines Risses in der Rohrleitungswand 3, zum Beispiel in Form eines linearen Defekts, wird eine Änderung des Ultraschallechos im PC-Modus festgestellt. Bei der Detektion der Änderung des Ultraschallechos wird berücksichtigt, dass ein Ultraschallecho, erzeugt von der/den Transmittereinheit(en) emittiertem Ultraschall teilweise durch den Riss gehemmt wird, und teilweise durch am Riss reflektieren Ultraschall erzeugt wird. Im Fall, dass der Riss zwischen der den Ultraschall emittierenden und der den Ultraschall detektierenden Transmittereinheit 4 lokalisiert ist, verringert sich das detektierte Signal des Ultraschallechos. Im Falle eines gemeinsamen Annäherns von emittierender und detektierender Transmittereinheit 4 an den Riss erhöht sich ein detektiertes Ultraschallecho-Signal im Vergleich zu einem Ultraschallecho-Signal, welches an einer intakten Rohrleitungswand-Oberfläche erzeugt wird. Die Transmittereinheiten 4, 4A, 4B können einen rauscharmen Verstärker mit hoher Verstärkung aufweisen (nicht dargestellt). Dieser kann in beiden Modi PE, PC eingesetzt werden.

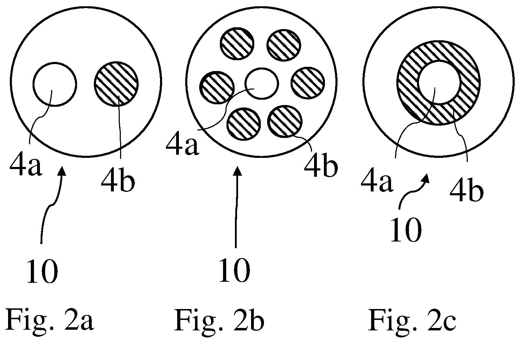

Die Transmittereinheiten 4, 4A, 4B der vorbeschriebenen und nachfolgend beschriebenen Ausführungsformen sind piezoelektrische Breitbandtransmitter. Die Baueinheiten 10 des Sensorsystems 1 können, alternativ zu einer Ausgestaltung mit jeweils einer Transmittereinheit 4A, 4B je Baueinheit 10, jeweils gemäß einem der Ausführungsbeispiele der Figuren 2a bis 2c ausgestaltet sein. Die Figuren 2a bis 2c zeigen jeweils eine schematische Draufsicht auf eine Ultraschalleintritts-/Austrittsfläche einer Baueinheit 10 eines Sensorsystems 1 gemäß einer dritten bis fünften Ausführungsform. In diesen Ausführungsbeispielen sind Ultraschall emittierende und Ultraschall detektierende Transmittereinheiten 4a, 4b in der Baueinheit 10 integriert. Die Transmittereinheiten 4a, 4b können je nach Betriebsmodus im PE-Modus oder PC-Modus als erste oder als zweite Transmittereinheit 4 operieren.

Gemäß der Ausführungsform nach Figur 2a weist die Baueinheit 10 eine emittierende Transmittereinheit 4b und eine detektierende Transmittereinheit 4a auf.

Gemäß dem Ausführungsbeispiel der Figur 2b weist die Baueinheit 10 mehrere Ultraschall emittierende Transmittereinheiten 4b und eine mittig zu den Ultraschall emittierenden Transmittereinheiten 4b angeordnete, Ultraschallechos detektierende Transmittereinheit 4a auf.

Gemäß einem Ausführungsbeispiel der Figur 2c weist eine Baueinheit 10 eine detektierende Transmittereinheit 4a auf und eine, die detektierende Transmittereinheit 4a ringförmig umschließende, emittierende Transmittereinheit 4b auf. In anderen Worten ist die zweite Transmittereinheit 4b durch einen an ihrer Ultraschallaustrittsfläche eingliedrigen Ring gebildet und innerhalb des Rings eine Ultraschalleintrittsfläche der ersten Transmittereinheit 4a angeordnet.

Alternativ oder zusätzlich sind Baueinheiten 10 nach dem Ausführungsbeispiel der Figur 2a oder 2c in einer Formation wie in Figur 2b dargestellt ist, zueinander (kreisförmig) angeordnet. Die Anzahl der in der Mitte angeordneten detektierenden Transmittereinheiten 4a und/oder der in dem Kreis angeordneten emittierenden Transmittereinheiten 4b ist nach Bedarf eines zu erreichenden Signal-Rausch-Verhältnisses, den Eigenschaften der Rohrleitung und einer Größe des Sensorsystems 1 anpassbar. Die emittierenden Transmittereinheiten 4b können auch in mehreren Kreisen unterschiedlicher Durchmesser um die detektierende(n) Transmittereinheit(en) 4a angeordnet sein. Erfindungsgemäß sind alternativ zu den vorgenannten Ausführungsbeispielen die detektierenden Transmittereinheiten 4a in Kreisen um eine oder mehrere Ultraschall emittierende Transmittereinheit(en) 4b angeordnet. Dies kann sowohl in einer Baueinheit 10 als auch in mehreren Baueinheiten 10 nach den vorbeschriebenen Prinzipien realisiert sein.

Gemäß einem Ausführungsbeispiel emittieren bzw. detektieren die Transmittereinheiten 4, 4a, 4A, 4B, 4b Ultraschall im hochfrequenten Bereich. Gemäß einem alternativen Ausführungsbeispiel emittieren bzw. detektieren die Transmittereinheiten 4, 4a, 4A, 4B, 4b Ultraschall im niederfrequenten Bereich. Alternativ umfasst das Sensorsystem 1 Baueinheiten 10, welche Ultraschall im hochfrequenten Bereich emittieren bzw. detektieren und Baueinheiten 10, welche Ultraschall im niederfrequenten Bereich emittieren bzw. detektieren.

Ein Flussdiagramm eines Verfahrens zum Erkennen einer Fehlstelle 2 und zum Charakterisieren einer Wanddicke WT der Rohrleitungswand 3 ist in Fig. 3 dargestellt. Das Verfahren weist folgende Schritte auf: Gemäß einem Schritt "S100" erfolgt das Operieren zumindest einer Transmittereinheit 4, 4a, 4A, 4b, 4B, um Ultraschall in Richtung der Rohrleitungswand 3 zu emittieren und ein von der Rohrleitungswand 3 reflektiertes Ultraschallecho zu detektieren. Gemäß einem Schritt "S200" erfolgt ein Operieren einer mit der zumindest einen Transmittereinheit 4, 4a, 4A, 4b, 4B signaltechnisch verbundenen Steuereinheit 5, um eine Fehlstelle 2 der Rohrleitungswand 3 anhand einer auftretenden Änderung des Ultraschallechos zu bestimmen.

Das Operieren (S100) der Transmittereinheit 4, 4a, 4A, 4b, 4B kann sowohl den PE-Modus als auch den PC-Modus umfassen. Der PE-Modus ist zum Detektieren von Korrosion unter Verwendung von einer Baueinheit 10 vorteilhaft, siehe Fig. 1a, oder wenn nur eine Baueinheit 10 bei dem Sensorsystem 1 des Ausführungsbeispiels der Fig. 1b benutzt wird. Im PE-Modus können ebenfalls eine der Transmittereinheiten 4a, 4b der Ausführungsbeispiele der Figuren 2a bis 2c bzw. die in diesem Zusammenhang beschriebenen Baueinheitskombinationen betrieben werden.

Der PC-Modus tritt im Zusammenhang des Operierens zumindest zweier Transmittereinheiten 4a, 4A, 4b, 4B auf. Diese können beispielsweise in separaten Baueinheiten 10 (siehe Fig. 1b) oder ein einer Baueinheit 10 (siehe Figuren 2a und 2c und die Ausführungen in diesem Zusammenhang) im PC-Modus operiert werden. Beispielhaft kann folgendes Verfahren mit folgenden Schritten verwendet werden:

Schritt "S100" umfasst ein Operieren zumindest einer ersten Transmittereinheit 4, 4a, 4A, 4b, 4B entsprechend dem PE-Modus und entsprechend dem PC-Modus, um Ultraschall in Richtung einer Rohrleitungswand 3 zu emittieren und ein von der Rohrleitungswand 3 reflektiertes Ultraschallecho zu detektieren. Weiterhin ist vorgesehen ein Operieren zumindest einer zweiten Transmittereinheit 4, 4a, 4A, 4b, 4B im PC-Modus, um das von der Rohrleitungswand 3 reflektierte Ultraschallecho zu detektieren.

Schritt "S200" umfasst ein Operieren einer mit den Transmittereinheiten 4, 4a, 4A, 4b, 4B signaltechnisch verbundenen Steuereinheit 5, um eine Fehlstelle 2 der Rohrleitungswand 3 anhand einer auftretenden Änderung des Ultraschallechos zu bestimmen.

Die Steuereinheit 5 verwertet bei der Bestimmung von Wanddicke WT und Eigenschaften von Fehlstellen 2 der Rohrleitungswand 3 den zeitlichen Verlauf eines Frequenzsignals, welches durch die Transmittereinheiten 4, 4a, 4A, 4b, 4B an die Steuereinheit 5 ausgegeben wird. Das Frequenzsignal wird entweder direkt oder nach mehrmaligem Anwenden einer Fouriertransformation (entweder in einer Frequenzebene oder in einer Zeitebene) ausgewertet.

Beim Operieren der Steuereinheit 5 (S200) zum Erkennen von Fehlstellen 2 können verschiedene Verfahren eingesetzt werden:
Die Steuereinheit 5 kann ein Verfahren zur Bestimmung von Korrosion anwenden (gekennzeichnet durch "K"). Zu diesem Zweck ist die Steuereinheit 5 konfiguriert, zur Bestimmung der Korrosion die Änderung des Ultraschallechos entsprechend einer von der Korrosion erzeugten Änderung einer Ultraschallecho-Divergenz auszuwerten.

Alternativ oder zusätzlich ist die Steuereinheit 5 konfiguriert ein Verfahren zur Bestimmung der Wanddicke WT (gekennzeichnet durch "WT1" in dem Flussdiagramm) durchzuführen. Das Verfahren WT1 führt die Steuereinheit 5 durch, um Daten gewonnen aus Messungen mit einer/mehreren Transmittereinheiten 4, 4a, 4A, 4b, 4B auszuwerten, welche hochfrequenten Ultraschall emittieren. Die Steuereinheit 5 bestimmt die Wanddicke WT (siehe Figuren 1a und 1b) der Rohrleitungswand 3 anhand einer Differenz zwischen einem Innenwandecho-Zeitpunkt (T_FWE) und einem Außenwandecho-Zeitpunkt (T_BWE). Die Innenwand FW (siehe Figuren 1a und 1b) ist eine der Transmittereinheit 4, 4a, 4A, 4b, 4B zugewandte Oberfläche der Rohrleitungswand 3. Die Außenwand BW (siehe Figuren 1a und 1b) ist eine der Transmittereinheit 4, 4a, 4A, 4b, 4B abgewandte Oberfläche der Rohrleitungswand 3, welche außerhalb der Rohrleitung liegt. Es kann bei der Bestimmung der Wanddicke WT ein erstes detektiertes Innenwandecho verwendet werden. Die Wanddicke WT kann alternativ oder zusätzlich mit einem zweiten oder weiteren detektierten Innenwandecho bestimmt werden. Die Wanddicke WT lässt sich dann aus folgender Formel herleiten: $WT = \frac{{C}_{L 2} \left({T}_{BWE}-{T}_{FWE}\right)}{2}$

Hierbei ist C_L2 die Schallgeschwindigkeit in der Rohrwand.

Alternativ oder zusätzlich ist die Steuereinheit 5 konfiguriert ein Verfahren zur Bestimmung der Wanddicke WT (gekennzeichnet durch "WT2" in dem Flussdiagramm) durchzuführen. Das Verfahren WT2 führt die Steuereinheit 5 durch, um Daten gewonnen aus Messungen mit einer/mehreren Transmittereinheiten 4, 4a, 4A, 4b, 4B auszuwerten, welche niederfrequenten Ultraschall emittieren. Hierbei ist die Steuereinheit 5 konfiguriert, eine Wanddicke WT der Rohrleitungswand 3 anhand von Resonanzfrequenzen f1, f2, ...fi des Außenwandechos zu bestimmen. Hierbei bestimmt die Steuereinheit 5 Resonanzfrequenzen f1, f2, ..., fi des Außenwandechos in einer Frequenzebene. Die Wanddicke WT ergibt sich dann aus $WT = \frac{{C}_{L 2}}{2 \left(f2-f1\right)}$

Hierbei ist C_L2 die Schallgeschwindigkeit in der Rohrwand. Die Resonanzfrequenz f2 des Außenwandechos ist die zeitlich auf die Resonanzfrequenz f1 des Außenwandechos folgende Resonanzfrequenz. Alternativ oder zusätzlich zu den Frequenzen f1 und f2 können andere, aus der Fouriertransformation gewonnene Resonanzfrequenzen fi verwendet werden, um die Wanddicke WT zu bestimmen.

Nachfolgend beschriebenes Verfahren der Steuereinheit 5 ist in dem Flussdiagramm mit "WT3" bezeichnet. Demnach kann ein Signal-Rausch-Verhältnis verbessert werden, indem eine Fouriertransformation zweiten Grades von dem detektierten Signal durchgeführt wird. Eine solche Fouriertransformation kann sowohl für Signale von hochfrequent als auch von niederfrequent betriebenen Transmittereinheiten 4, 4a, 4b, 4A, 4B durchgeführt werden. Hierbei wird eine Wanddicke WT bestimmt anhand einer Periodendauer T1, T2, ..., Ti des Außenwandecho-Zeitpunkts T_BWE eines mittels schnellen Fouriertransformation (FFT) zweiten Grades transformierten Ultraschallsignals. Hierbei wird bevorzugt eine maximal große Amplitude des Signals des Außenwandechos für die Wanddickenbestimmung benutzt. Die Wanddicke WT ergibt sich dann beispielsweise unter Berücksichtigung einer Periodendauer T1 der maximal großen Amplitude des Außenwandecho-Signals: $WT = \frac{{C}_{L 2} T 1}{2}$

Alternativ oder zusätzlich ist die Steuereinheit 5 konfiguriert ein Verfahren zur Bestimmung von Risseigenschaften (gekennzeichnet durch zu engl. "crack detection" (deutsch: Risserkennung), abgekürzt mit "CD" in dem Flussdiagramm) durchzuführen. Das Verfahren CD führt die Steuereinheit 5 durch, um Daten gewonnen aus Messungen mit einer/mehreren Transmittereinheiten 4, 4a, 4A, 4b, 4B auszuwerten, welche niederfrequenten oder hochfrequenten Ultraschall emittieren. Hierbei ist die Steuereinheit 5 konfiguriert, eine Rissdetektion und eine Riss-Größenbestimmung anhand von Amplituden von den Resonanzfrequenzen f1, f2, ...fi und (einer) Amplitude(n) eines Außenwandechos durchzuführen. Insbesondere ist die Steuereinheit 5 konfiguriert, eine Rissdetektion und eine Riss-Größenbestimmung anhand von Amplituden von Resonanzfrequenzen f1, f2, ...fi in einer Frequenzebene und (einer) Amplitude(n) eines Außenwandechos eines mittels FFT zweiten Grades transformierten Ultraschallsignals durchzuführen. Bei dem vorbeschriebenen Verfahren der Untersuchung von Risseigenschaften ist eine Abschwächung des Ultraschallechos proportional zu einer Tiefe der Fehlstelle 2.

Die vorgenannten Ausführungsbeispiele eignen sich für die Wanddickenbestimmung von Rohrleitungen mit Dicken von 6 mm bis 30 mm. Andere Wanddicken WT sind ebenfalls denkbar.

### Bezugszeichenliste

- 1: Sensorsystem
- 2: Fehlstelle
- 3: Rohrleitungswand
- 4, 4a, 4b, 4A, 4B: Transmittereinheit
- 5: Steuereinheit

- 10: Baueinheit

- BW: Außenwand der Rohrleitung
- CD: Verfahren zur Charakterisierung von Rissen
- FW: Innenwand der Rohrleitung
- PC: PC-Modus
- PE: PE-Modus
- WT: Wanddicke
- WT1: erstes Verfahren zur Wanddickenbestimmung
- WT2: zweites Verfahren zur Wanddickenbestimmung
- WT3: drittes Verfahren zur Wanddickenbestimmung

- S100: Operieren zumindest einer Transmittereinheit
- S200: Operieren zumindest einer Steuereinheit

## Patentansprüche

1. Akustisches Sensorsystem (1) zum Bestimmen von einer Fehlstelle (2) einer Rohrleitungswand (3), aufweisend:
eine Vielzahl von Transmittereinheiten (4a, 4b), die konfiguriert sind, Ultraschall in Richtung der Rohrleitungswand (3) zu emittieren und ein von der Rohrleitungswand (3) reflektiertes Ultraschallecho zu detektieren,
und
eine mit den Transmittereinheiten (4a, 4b) signaltechnisch verbundene Steuereinheit (5), die konfiguriert ist, die Fehlstelle (2) der Rohrleitungswand (3) anhand einer auftretenden Änderung des Ultraschallechos zu bestimmen, wobei die Steuereinheit (5) konfiguriert ist:
in einem Pulse-Echo-Modus, PE-Modus, zumindest eine erste Transmittereinheit (4a, 4b) des Sensorsystems (1) anzusteuern, zum Emittieren von Ultraschall in Richtung der Rohrleitungswand (3) und zum Detektieren eines von der Rohrleitungswand (3) reflektierten Ultraschallechos;
in einem Pitch-Catch-Modus, PC-Modus, temporär zumindest eine zweite Transmittereinheit (4a, 4b) des Sensorsystems (1) anzusteuern, zum Detektieren des von der Rohrleitungswand (3) reflektierten Ultraschallechos;
die Fehlstelle (2) der Rohrleitungswand (3) anhand einer auftretenden Änderung des Ultraschallechos zu bestimmen; und
die Transmittereinheiten (4a, 4b) je nach Betriebsmodus im PE-Modus oder im PC-Modus als eine erste oder als eine zweite Transmittereinheit (4a, 4b) zu betreiben;
**dadurch gekennzeichnet, dass**
detektierende Transmittereinheiten (4a) in Kreisen um eine oder mehrere Ultraschall emittierende Transmittereinheit(en) (4b) angeordnet sind.

2. Akustisches Sensorsystem (1) nach Anspruch 1, wobei die Steuereinheit (5) konfiguriert ist, eine Wanddicke (WT) der Rohrleitungswand (3) anhand einer Differenz zwischen einem Innenwandecho-Zeitpunkt (T_FWE) und einem Außenwandecho-Zeitpunkt (T_BWE) zu bestimmen.

3. Akustisches Sensorsystem (1) nach mindestens einem der vorgehenden Ansprüche, wobei die Steuereinheit (5) konfiguriert ist, eine Wanddicke (WT) der Rohrleitungswand (3) anhand von zumindest einer Resonanzfrequenz (f1, f2, ...fi) des Außenwandechos und einer Periodendauer der zumindest einen Resonanzfrequenz (f1, f2, ...fi) des Außenwandechos zu bestimmen.

4. Akustisches Sensorsystem (1) nach mindestens einem der vorgehenden Ansprüche, wobei die Steuereinheit (5) konfiguriert ist, eine Wanddicke (WT) der Rohrleitungswand (3) anhand von zumindest einem Außenwandecho-Zeitpunkt (T_BWE) und zumindest einer Periodendauer (T1, T2,..Ti) eines Außenwandechos zu diesem zumindest einen Außenwandecho-Zeitpunkt (T_BWE) zu bestimmen, wobei die Periodendauer (T1, T2,..Ti) die Fouriertransformierte einer Frequenz des Außenwandechos ist.

5. Akustisches Sensorsystem (1) nach mindestens einem der vorgehenden Ansprüche, wobei die Steuereinheit (5) konfiguriert ist, eine Rissdetektion und eine Riss-Größenbestimmung anhand von zumindest einer Amplitude von zumindest einer Resonanzfrequenz (f1, f2, ...fi) durchzuführen; oder
wobei die Steuereinheit (5) konfiguriert ist, eine Rissdetektion und eine Riss-Größenbestimmung anhand von zumindest einer Amplitude von zumindest einer Resonanzfrequenz (f1, f2, ...fi) und zumindest einer Amplitude eines Außenwandechos durchzuführen.

6. Akustisches Sensorsystem (1) nach dem vorgehenden Anspruch,
wobei eine Abschwächung des Ultraschallechos proportional zu einer Tiefe der Fehlstelle (2) ist.

7. Akustisches Sensorsystem (1) nach mindestens einem der vorgehenden Ansprüche, aufweisend
mehrere Transmittereinheiten (4a), die konfiguriert ist, reflektierten Ultraschall zu detektieren, und
mehrere, um die Transmittereinheiten (4a) angeordnete, Transmittereinheiten (4b), die jeweils konfiguriert sind, Ultraschall zu senden.

8. Akustisches Sensorsystem (1) nach mindestens einem der vorgehenden Ansprüche, aufweisend eine Vielzahl von Transmittereinheiten (4a, 4b), von denen mehrere erste Transmittereinheit (4a) konfiguriert sind, reflektierten Ultraschall zu detektieren, und
eine zweite Transmittereinheit (4b) konfiguriert ist, Ultraschall zu senden.

9. Akustisches Sensorsystem (1) nach dem vorgehenden Anspruch, wobei eine zweite Transmittereinheit (4a, 4b) durch einen an ihrer Ultraschallaustrittsfläche einstückigen Ring gebildet ist und, vorzugsweise konzentrisch, innerhalb des Rings eine Ultraschalleintrittsfläche einer ersten Transmittereinheit (4a, 4b) angeordnet ist.

10. Inline-Inspektionsgerät, ILI, zur Untersuchung einer Rohrleitungswand (3), aufweisend ein oder mehrere akustisches Sensorsystem (1)/akustische Sensorsysteme (1) nach mindestens einem der vorgehenden Ansprüche.

11. Verfahren zum Bestimmen von einer Fehlstelle (2) einer Rohrleitungswand (3), aufweisend folgende Schritte:
Operieren (S100) einer Vielzahl von Transmittereinheiten (4a, 4b), um Ultraschall in Richtung der Rohrleitungswand (3) zu emittieren und ein von der Rohrleitungswand (3) reflektiertes Ultraschallecho zu detektieren; und Operieren (S200) einer mit den Transmittereinheiten (4a, 4b) signaltechnisch verbundenen Steuereinheit (5), um die Fehlstelle (2) der Rohrleitungswand (3) anhand einer auftretenden Änderung des Ultraschallechos zu bestimmen,
wobei das Operieren (S100, S200) aufweist:
in einem Pulse-Echo-Modus, PE-Modus, Ansteuern zumindest einer ersten Transmittereinheit (4a, 4b) des Sensorsystems (1), zum Emittieren von Ultraschall in Richtung der Rohrleitungswand (3) und zum Detektieren eines von der Rohrleitungswand (3) reflektierten Ultraschallechos;
in einem Pitch-Catch-Modus, PC-Modus, temporäres Ansteuern zumindest einer zweiten Transmittereinheit (4a, 4b) des Sensorsystems (1), zum Detektieren des von der Rohrleitungswand (3) reflektierten Ultraschallechos; und
Bestimmen der Fehlstelle (2) der Rohrleitungswand (3) anhand einer auftretenden Änderung des Ultraschallechos,
wobei die Transmittereinheiten (4a, 4b) je nach Betriebsmodus im PE-Modus oder im PC-Modus als eine erste oder als eine zweite Transmittereinheit (4a, 4b) operieren,
**dadurch gekennzeichnet, dass**
detektierende Transmittereinheiten (4a) in Kreisen um eine oder mehrere Ultraschall emittierende Transmittereinheit(en) (4b) angeordnet sind.

12. Computerprogramm, umfassend Befehle, die bei der Ausführung des Computerprogramms ein akustisches Sensorsystem (1) nach einem der Ansprüche 1 bis 9 oder ein Inline-Inspektionsgerät nach Anspruch 10 veranlassen, ein Verfahren nach dem vorgenannten Anspruch auszuführen.

13. Computerlesbares Medium, umfassend Befehle, die bei der Ausführung ein akustisches Sensorsystem (1) nach einem der Ansprüche 1 bis 9 oder ein Inline-Inspektionsgerät nach Anspruch 10 veranlassen, ein Verfahren nach Anspruch 11 auszuführen.

## Claims

1. An acoustic sensor system (1) for determining a defect (2) of a pipeline wall (3), comprising:
a plurality of transmitter units (4a, 4b) configured to emit ultrasound in the direction of the pipeline wall (3) and to detect an ultrasound echo reflected by the pipeline wall (3),
and
a control unit (5) which is connected to the transmitter units (4a, 4b) for signalling purposes and which is configured to determine the defect (2) of the pipeline wall (3) on the basis of a change occurring in the ultrasound echo, wherein the control unit (5) is configured:
in a pulse-echo mode, PE mode, to drive at least one first transmitter unit (4a, 4b) of the sensor system (1), for emitting ultrasound in the direction of the pipeline wall (3) and for detecting an ultrasound echo reflected by the pipeline wall (3);
in a pitch-catch mode, PC mode, to temporarily drive at least one second transmitter unit (4a, 4b) of the sensor system (1), for detecting the ultrasound echo reflected by the pipeline wall (3);
to determine the defect (2) of the pipeline wall (3) on the basis of a change occurring in the ultrasound echo; and
to operate the transmitter units (4a, 4b), depending on the operating mode in the PE mode or in the PC mode, as a first or as a second transmitter unit (4a, 4b);
**characterised in that** detecting transmitter units (4a) are arranged in circles around one or more ultrasound-emitting transmitter unit(s) (4b).

2. An acoustic sensor system (1) according to claim 1, wherein the control unit (5) is configured to determine a wall thickness (WT) of the pipeline wall (3) on the basis of a difference between an inner wall echo time (T_FWE) and an outer wall echo time (T_BWE).

3. An acoustic sensor system (1) according to at least one of the preceding claims, wherein the control unit (5) is configured to determine a wall thickness (WT) of the pipeline wall (3) on the basis of at least one resonance frequency (f1, f2, ...fi) of the outer wall echo and of a period of the at least one resonance frequency (f1, f2, ...fi) of the outer wall echo.

4. An acoustic sensor system (1) according to at least one of the preceding claims, wherein the control unit (5) is configured to determine a wall thickness (WT) of the pipeline wall (3) on the basis of at least one outer wall echo time (T_BWE) and of at least one period (T1, T2,..Ti) of an outer wall echo at said at least one outer wall echo time (T_BWE), wherein the period (T1, T2,..Ti) is the Fourier transform of a frequency of the outer wall echo.

5. An acoustic sensor system (1) according to at least one of the preceding claims, wherein the control unit (5) is configured to perform a crack detection and a crack size determination on the basis of at least one amplitude of at least one resonance frequency (f1, f2, ...fi); or
wherein the control unit (5) is configured to perform a crack detection and a crack size determination on the basis of at least one amplitude of at least one resonance frequency (f1, f2, ...fi) and of at least one amplitude of an outer wall echo.

6. An acoustic sensor system (1) according to the preceding claim,
wherein an attenuation of the ultrasound echo is proportional to a depth of the defect (2).

7. An acoustic sensor system (1) according to at least one of the preceding claims, comprising
several transmitter units (4a) configured to detect reflected ultrasound, and
several transmitter units (4b) arranged around the transmitter units (4a) and each configured to transmit ultrasound.

8. An acoustic sensor system (1) according to at least one of the preceding claims, comprising a plurality of transmitter units (4a, 4b), of which
several first transmitter units (4a) are configured to detect reflected ultrasound, and
a second transmitter unit (4b) is configured to transmit ultrasound.

9. An acoustic sensor system (1) according to the preceding claim, wherein a second transmitter unit (4a, 4b) is formed by a ring that is one-piece at its ultrasound exit surface, and an ultrasound entry surface of a first transmitter unit (4a, 4b) is arranged, preferably concentrically, inside the ring.

10. An in-line inspection device, ILI, for examining a pipeline wall (3), comprising one or more acoustic sensor systems (1) according to at least one of the preceding claims.

11. A method for determining a defect (2) of a pipeline wall (3), comprising the following steps:
operating (S100) a plurality of transmitter units (4a, 4b), in order to emit ultrasound in the direction of the pipeline wall (3) and to detect an ultrasound echo reflected by the pipeline wall (3); and operating (S200) a control unit (5) which is connected to the transmitter units (4a, 4b) for signalling purposes, in order to determine the defect (2) of the pipeline wall (3) on the basis of a change occurring in the ultrasound echo,
wherein the operating (S100, S200) comprises:
in a pulse-echo mode, PE mode, driving at least one first transmitter unit (4a, 4b) of the sensor system (1), for emitting ultrasound in the direction of the pipeline wall (3) and for detecting an ultrasound echo reflected by the pipeline wall (3);
in a pitch-catch mode, PC mode, temporarily driving at least one second transmitter unit (4a, 4b) of the sensor system (1), for detecting the ultrasound echo reflected by the pipeline wall (3); and
determining the defect (2) of the pipeline wall (3) on the basis of a change occurring in the ultrasound echo,
wherein the transmitter units (4a, 4b) operate, depending on the operating mode in the PE mode or in the PC mode, as a first or as a second transmitter unit (4a, 4b),
**characterised in that** detecting transmitter units (4a) are arranged in circles around one or more ultrasound-emitting transmitter unit(s) (4b).

12. A computer program comprising instructions which, when the computer program is executed, cause an acoustic sensor system (1) according to any one of claims 1 to 9 or an in-line inspection device according to claim 10 to carry out a method according to the preceding claim.

13. A computer-readable medium comprising instructions which, when executed, cause an acoustic sensor system (1) according to any one of claims 1 to 9 or an in-line inspection device according to claim 10 to carry out a method according to claim 11.

## Revendications

1. Système de détection acoustique (1) pour déterminer un défaut (2) d'une paroi de canalisation (3), comprenant :
une pluralité d'unités de transmission (4a, 4b) configurées pour émettre des ultrasons en direction de la paroi de canalisation (3) et pour détecter un écho ultrasonore réfléchi par la paroi de canalisation (3),
et
une unité de commande (5) reliée aux unités de transmission (4a, 4b) par une liaison de signaux et configurée pour déterminer le défaut (2) de la paroi de canalisation (3) sur la base d'une variation survenant dans l'écho ultrasonore, l'unité de commande (5) étant configurée :
dans un mode pulse-echo, mode PE, pour commander au moins une première unité de transmission (4a, 4b) du système de détection (1), pour l'émission d'ultrasons en direction de la paroi de canalisation (3) et pour la détection d'un écho ultrasonore réfléchi par la paroi de canalisation (3) ;
dans un mode pitch-catch, mode PC, pour commander temporairement au moins une deuxième unité de transmission (4a, 4b) du système de détection (1), pour la détection de l'écho ultrasonore réfléchi par la paroi de canalisation (3) ;
pour déterminer le défaut (2) de la paroi de canalisation (3) sur la base d'une variation survenant dans l'écho ultrasonore ; et
pour faire fonctionner les unités de transmission (4a, 4b), selon le mode de fonctionnement dans le mode PE ou dans le mode PC, comme une première ou comme une deuxième unité de transmission (4a, 4b) ;
**caractérisé en ce que** des unités de transmission détectrices (4a) sont disposées en cercles autour d'une ou de plusieurs unité(s) de transmission (4b) émettant des ultrasons.

2. Système de détection acoustique (1) selon la revendication 1, l'unité de commande (5) étant configurée pour déterminer une épaisseur de paroi (WT) de la paroi de canalisation (3) sur la base d'une différence entre un instant d'écho de paroi intérieure (T_FWE) et un instant d'écho de paroi extérieure (T_BWE).

3. Système de détection acoustique (1) selon au moins l'une des revendications précédentes, l'unité de commande (5) étant configurée pour déterminer une épaisseur de paroi (WT) de la paroi de canalisation (3) sur la base d'au moins une fréquence de résonance (f1, f2, ...fi) de l'écho de paroi extérieure et d'une période de ladite au moins une fréquence de résonance (f1, f2, ...fi) de l'écho de paroi extérieure.

4. Système de détection acoustique (1) selon au moins l'une des revendications précédentes, l'unité de commande (5) étant configurée pour déterminer une épaisseur de paroi (WT) de la paroi de canalisation (3) sur la base d'au moins un instant d'écho de paroi extérieure (T_BWE) et d'au moins une période (T1, T2,..Ti) d'un écho de paroi extérieure audit au moins un instant d'écho de paroi extérieure (T_BWE), la période (T1, T2,..Ti) étant la transformée de Fourier d'une fréquence de l'écho de paroi extérieure.

5. Système de détection acoustique (1) selon au moins l'une des revendications précédentes, l'unité de commande (5) étant configurée pour effectuer une détection de fissure et une détermination de la taille de la fissure sur la base d'au moins une amplitude d'au moins une fréquence de résonance (f1, f2, ...fi) ; ou
l'unité de commande (5) étant configurée pour effectuer une détection de fissure et une détermination de la taille de la fissure sur la base d'au moins une amplitude d'au moins une fréquence de résonance (f1, f2, ...fi) et d'au moins une amplitude d'un écho de paroi extérieure.

6. Système de détection acoustique (1) selon la revendication précédente,
une atténuation de l'écho ultrasonore étant proportionnelle à une profondeur du défaut (2).

7. Système de détection acoustique (1) selon au moins l'une des revendications précédentes, comprenant
plusieurs unités de transmission (4a) configurées pour détecter des ultrasons réfléchis, et
plusieurs unités de transmission (4b) disposées autour des unités de transmission (4a) et configurées chacune pour émettre des ultrasons.

8. Système de détection acoustique (1) selon au moins l'une des revendications précédentes, comprenant une pluralité d'unités de transmission (4a, 4b), dont
plusieurs premières unités de transmission (4a) sont configurées pour détecter des ultrasons réfléchis, et
une deuxième unité de transmission (4b) est configurée pour émettre des ultrasons.

9. Système de détection acoustique (1) selon la revendication précédente, une deuxième unité de transmission (4a, 4b) étant formée par un anneau d'un seul tenant au niveau de sa surface de sortie des ultrasons, et une surface d'entrée des ultrasons d'une première unité de transmission (4a, 4b) étant disposée, de préférence de manière concentrique, à l'intérieur de l'anneau.

10. Dispositif d'inspection en ligne, ILI, pour l'examen d'une paroi de canalisation (3), comprenant un ou plusieurs systèmes de détection acoustique (1) selon au moins l'une des revendications précédentes.

11. Procédé pour déterminer un défaut (2) d'une paroi de canalisation (3), comprenant les étapes suivantes :
le fonctionnement (S100) d'une pluralité d'unités de transmission (4a, 4b), afin d'émettre des ultrasons en direction de la paroi de canalisation (3) et de détecter un écho ultrasonore réfléchi par la paroi de canalisation (3) ; et le fonctionnement (S200) d'une unité de commande (5) reliée aux unités de transmission (4a, 4b) par une liaison de signaux, afin de déterminer le défaut (2) de la paroi de canalisation (3) sur la base d'une variation survenant dans l'écho ultrasonore,
le fonctionnement (S100, S200) comprenant :
dans un mode pulse-echo, mode PE, la commande d'au moins une première unité de transmission (4a, 4b) du système de détection (1), pour l'émission d'ultrasons en direction de la paroi de canalisation (3) et pour la détection d'un écho ultrasonore réfléchi par la paroi de canalisation (3) ;
dans un mode pitch-catch, mode PC, la commande temporaire d'au moins une deuxième unité de transmission (4a, 4b) du système de détection (1), pour la détection de l'écho ultrasonore réfléchi par la paroi de canalisation (3) ; et
la détermination du défaut (2) de la paroi de canalisation (3) sur la base d'une variation survenant dans l'écho ultrasonore,
les unités de transmission (4a, 4b) fonctionnant, selon le mode de fonctionnement dans le mode PE ou dans le mode PC, comme une première ou comme une deuxième unité de transmission (4a, 4b),
**caractérisé en ce que** des unités de transmission détectrices (4a) sont disposées en cercles autour d'une ou de plusieurs unité(s) de transmission (4b) émettant des ultrasons.

12. Programme d'ordinateur comprenant des instructions qui, lors de l'exécution du programme d'ordinateur, amènent un système de détection acoustique (1) selon l'une quelconque des revendications 1 à 9 ou un dispositif d'inspection en ligne selon la revendication 10 à exécuter un procédé selon la revendication précédente.

13. Support lisible par ordinateur comprenant des instructions qui, lors de leur exécution, amènent un système de détection acoustique (1) selon l'une quelconque des revendications 1 à 9 ou un dispositif d'inspection en ligne selon la revendication 10 à exécuter un procédé selon la revendication 11.
